# EUROPEAN PATENT SPECIFICATION

(11) **EP 2 921 438 B1**
(45) Date of publication and mention of the grant of the patent: **27.07.2016**
(21) Application number: 14161203.6
(22) Date of filing: 21.03.2014
(51) Int. Cl.: B65G 47/84

(54) **A conveying apparatus for conveying containers, in particular bottles**
Eine Fördervorrichtung zum Fördern von Behältern, insbesondere von Flaschen
Une installation de transport pour transporter des récipients, en particulier des bouteilles

(43) Date of publication of application: 23.09.2015
(73) Proprietor: Sidel S.p.a. Con Socio Unico, Parma (IT)
(72) Inventor: Melioli, Daniele, 43126 PARMA (IT); Bianchi, Paolo, 43126 PARMA (IT)
(74) Representative: D'Angelo, Fabio

(56) References cited:
- EP-A1- 2 360 109
- DE-A1-102006 055 317

## Description

The present invention relates to a conveying apparatus for conveying containers, according to the preamble of claim 1, in particular to a starwheel conveying apparatus for conveying bottles, which the following description will refer to, although this is in no way intended to limit the scope of protection as defined by the accompanying claims.

As known, a starwheel conveying apparatus basically comprises a fixed support structure, a plurality of starwheels rotating about respective vertical axes for advancing bottles along a transfer path including a plurality of arc-shaped portions, and a plurality of guiding elements also having respective arc-shaped configurations and extending about the transfer path to prevent the bottles from disengaging from the starwheels during the movement thereof.

In particular, as known, each starwheel is peripherally provided with a plurality of U-shaped recesses engaged by the upper portions of respective bottles; during the movement of the starwheel, it is necessary to provide, about the arc-shaped portion of the path followed by the bottles, a guide element having a corresponding configuration and adapted to cooperate with the outer side of the bottles to avoid them from being disengaged from the respective recesses due to centrifugal forces.

The guide elements are typically mounted on respective support uprights or feet in respective coupling conditions and are releasably locked in these coupling conditions by locking lever mechanisms.

In bottle conveying apparatuses of known type, it is often necessary to replace the guide elements and also optionally the parts of the starwheels carrying the bottles to convert the conveying apparatus to the use with bottles having different sizes.

These operations require too long times as the operators have to act on a plurality of locking lever mechanisms to set them in respective unlocking configurations prior to disassemble the guide elements from the support uprights. The same problems occur when the new guide elements have to be locked on the respective support uprights.

It is therefore an object of the present invention to provide a conveying apparatus for conveying containers, in particular bottles, which is designed to simply and cost-effective overcome the drawback connected to the above-specified conveying apparatuses of known type.

According to the present invention, there is provided a conveying apparatus for conveying containers, in particular bottles, as claimed in claim 1.

A non-limiting embodiment of the present invention will be described by way of example with reference to the accompanying drawings, in which:
- Figure 1 shows a top plan view, with parts removed for clarity, of a starwheel conveying apparatus according to the present invention;
- Figure 2 shows a larger-scale perspective view of the conveying apparatus of Figure 1;
- Figure 3 shows a perspective view of a guiding system of the conveying apparatus of Figures 1 and 2;
- Figures 4 and 5 are larger-scale sections along line IV-IV of Figure 2, showing a support upright and a part of a guide element of the conveying apparatus of Figures 1 to 3, in different conditions; and
- Figure 6 shows a smaller-scale perspective view of the assembly formed by the support upright and by the guide element of Figures 4 and 5.

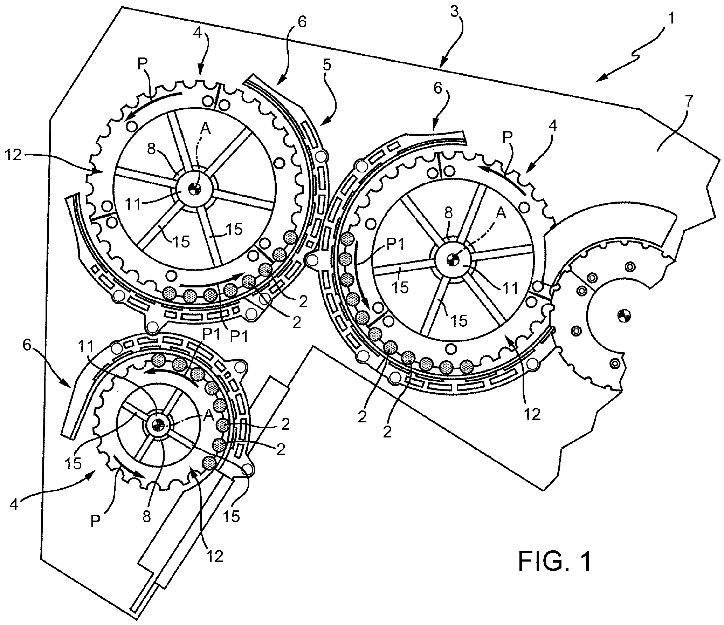

With reference to figures 1 to 3, number 1 indicates as a whole a conveying apparatus according to the present invention and adapted to convey containers, in particular bottles 2, within a system or plant (known per se and not shown) for handling the bottles 2.

Conveying apparatus 1 basically comprises a support structure 3, a plurality of starwheels 4, in the example shown three, for advancing bottles 2 along a transfer path P, and a guiding system 5 in turn including a plurality of guide elements 6 to exert in use a guiding action on the bottles 2 as they are advanced by starwheels 4.

Support structure 3 comprises a horizontal bedplate 7, a plurality of vertical columns 8 secured to bedplate 7 and protruding therefrom for supporting respective starwheels 4, and a plurality of vertical uprights 10 also secured to the bedplate 7 and protruding therefrom for supporting respective guide elements 6.

In particular, columns 8 have respective axes A parallel to one another, and starwheels 4 are mounted on columns 8 to rotate about the respective axes A. More specifically, each starwheel 4 rotates about the respective axis A to transfer bottles 2 along a relative predetermined arc-shaped portion P1 of path P.

In the example shown, starwheels 4 are used in pairs to feed the bottles 2 to a respective processing machine (known per se and not shown), such as a filling machine or a rinsing machine, and to receive the bottles 2 processed by such machine. One of the starwheels 4, i.e. that at the top and on the left in Figure 1, is used to receive the bottles 2 from an upstream machine, such as a rinsing machine, and to feed the bottles 2 to a downstream machine, such as a filling machine.

Each starwheel 4 comprises a central shaft 11 mounted in a rotating manner within a relative column 8, and a wheel portion 12 angularly secured to shaft 11 and adapted to peripherally move and support bottles 2. In particular, wheel portion 12 comprises an upper and a lower circumferential plate 13, 14 extending around shaft 11 and connected to the latter by a plurality of radial spokes 15; plates 13, 14 are fixed parallel to one another by a plurality of spacers 16, which maintain the plates 13, 14 at a predetermined constant vertical distance.

Plates 13 and 14 have identical configurations and are provided with respective series of peripheral U-shaped recesses 17 adapted to be engaged in use by respective bottles 2.

With reference to the enclosed Figures, each guide element 6 is releasably mounted on one or more uprights 10 in a coupling condition and extends along a side of a relative arc-shaped portion P1 of path P to exert in use a guiding action on bottles 2 as they are advanced by the relative starwheel 4.

Guiding system 5 also comprises releasable locking means 18 to lock each guide element 6 in the coupling condition on the respective uprights 10.

As guide elements 6 have similar structures, only one will be described hereafter for the sake of simplicity; the same also applies to uprights 10, which are identical to one another; it is however clear that the following description will apply to any guide element 6 and to any upright 10.

Guide element 6 faces the periphery portion of the relative starwheel 4 to prevent bottles 2 from disengaging from respective recesses 17 during the rotation of the starwheel 4 about its axis A.

Guide element 6 comprises an arc-shaped deflector 20 coaxial with the facing starwheel 4 and having, in the example shown, an angular extension greater than 180° and approximately equal to 270° about the relative axis A.

In particular, deflector 20 comprises an upper curvilinear interacting plate 21 and a lower curvilinear interacting plate 22 having identical configurations and fixed parallel to one another by a plurality of spacers 23, which maintain plates 21, 22 at a predetermined constant vertical distance.

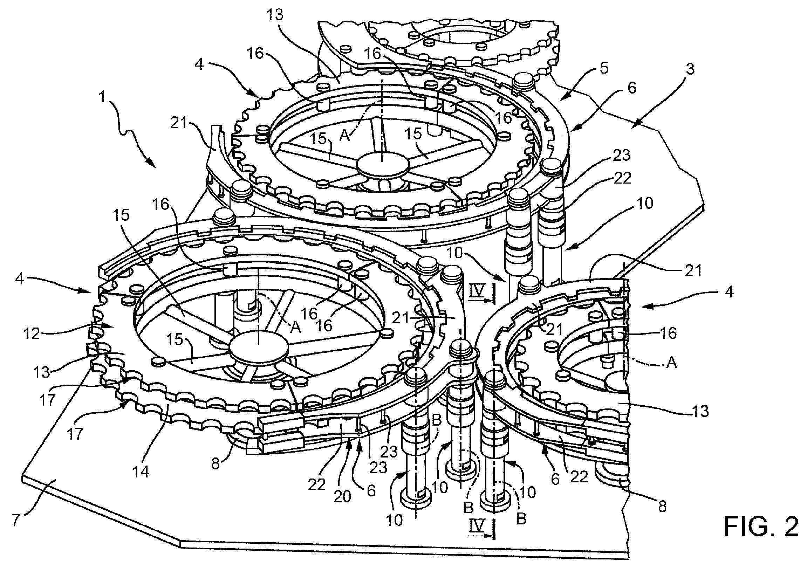

Guide element 6 also comprises one or more cup-shaped connecting portions 24 (see in particular Figures 2 to 6) secured to deflector 20 on one side thereof opposite the side cooperating with bottles 2.

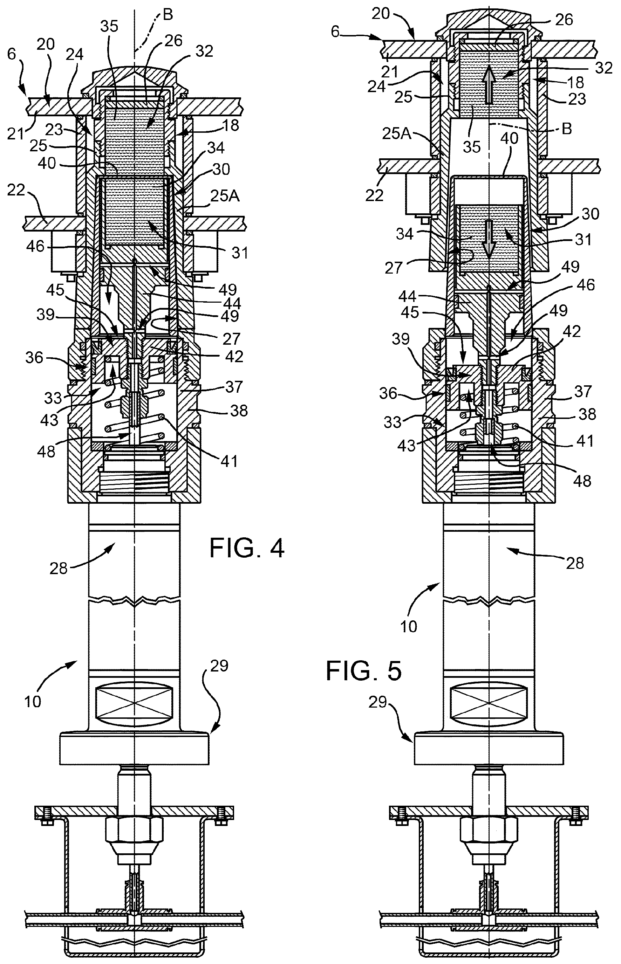

Each connecting portion 24 (see in particular Figures 4 and 5) has an annular lateral wall 25, an upper disc-shaped wall 26 and a bottom opening 27. In particular, lateral wall 25 of each connecting portion 24 has an end length 25A delimited by a truncated-conical inner surface and defining opening 27.

As it will be explained in greater details later on, each connecting portion 24 is destined to be engaged in use by a respective upright 10 to define the coupling condition of guide element 6 with the upright 10 itself.

Upright 10 comprises a hollow body 28 having a vertical axis B parallel to axes A; upright 10 (see in particular Figures 4 and 5) has a bottom end portion 29 secured to bedplate 7 and a closed upper end portion 30 having an outer side surface complementary in shape to the inner surface of end length 25A of a relative connecting portion 24 of guide element 6 and adapted to axially engage the connecting portion 24 itself in the coupling condition.

In particular, during coupling of connecting portion 24 with upright 10, end portion 30 is inserted into the connecting portion 24 itself through opening 27.

With reference to Figures 4 and 5, each guide element 6 and the respective upright 10 comprise locking means 18 in turn including at least a first magnetic element 31 carried by upright 10, at least a second magnetic element 32 carried by guide element 6, and activation means 33 for selectively setting magnetic elements 31, 32 in a reciprocal magnetic attraction condition (Figure 4).

It is pointed out that, in the present description and in the claims, the term "magnetic element" is used to indicate any element sensitive to a magnetic field and/or capable of a magnetic interaction, i.e. capable of attracting other elements sensitive to magnetic fields or capable of being attracted by a magnetic field. Therefore, the term "magnetic element" may include, among others, both a permanent magnet and an electromagnet.

According to a preferred embodiment of the present invention, magnetic elements 31, 32 comprise respective permanent magnets 34, 35 having opposite polarities; in this case, activation means 33 comprise an actuator 36 for moving at least one (34) of permanent magnets 34, 35 to and away from the other (35) of permanent magnets 34, 35 in order to lock or unlock guide element 6 on upright 10 in the coupling condition.

In particular, in the example shown, permanent magnet 34 is housed within end portion 30 of upright 10, whilst permanent magnet 35 is housed within connecting portion 24 of guide element 6. More specifically, permanent magnet 34 is directly carried by actuator 36, in turn housed inside upright 10.

As visible in Figures 4 and 5, actuator 36 is of pneumatic type and includes a cylinder 37, defined by a portion of a lateral wall 38 of upright 10, and a movable element 39 coupled in a sliding and fluid-tight manner inside lateral wall 38 of upright 10 and secured to permanent magnet 34. In particular, permanent magnet 34 is axially interposed between movable element 39 and an upper disk-shaped wall 40 of end portion 30 of upright 10.

Permanent magnet 34 is moved by movable element 39 of actuator 36 between an active position (Figure 4), in which permanent magnet 34 is adjacent to permanent magnet 35 and exerts a magnetic attraction thereon, and a release position (Figure 5), in which permanent magnet 34 is spaced out from the permanent magnet 35 so as to exclude reciprocal magnetic attraction.

According to a preferred embodiment of the present invention, permanent magnet 34 is loaded by a spring 41 towards its active position and is moved back to its release position by actuator 36.

In greater details, spring 41 is of cylindrical helical type and is housed coaxially within lateral wall 38 of upright 10 and between movable element 39 and an axial abutment (not shown) provided inside the upright 10 itself.

Movable element 39 comprises a cup-shaped piston 42 housing, at its open side 43, part of helical spring 41, and a mushroom-shaped appendix 44, which axially protrudes from a side 45 of piston 42 opposite side 43 and is directly secured to permanent magnet 34.

Piston 42, appendix 44 and lateral wall 38 of upright 10 delimit an annular chamber 46, fed in use with pressurized air to displace movable element 39 to the release position against the action exerted by spring 41.

Pressurized air is fed to chamber 46 by a vertical conduit 48, extending coaxially with axis B as well as through piston 42 and appendix 44, and by a plurality of radial holes 49 formed within appendix 44.

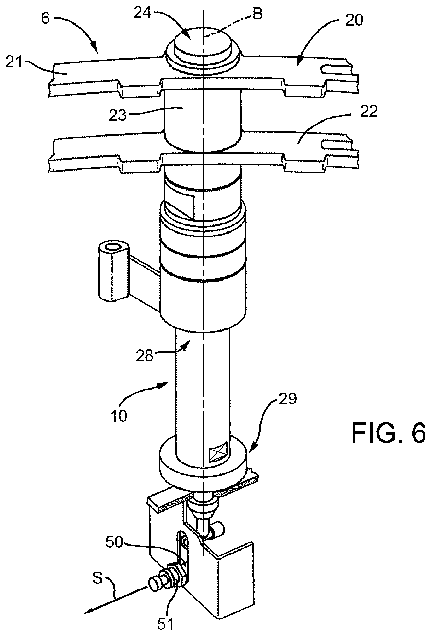

With reference to Figure 6, upright 10 is also provided with a position sensor 50 (only schematically represented in Figure 6) adapted to generate an output signal S correlated to the position of movable element 39, and therefore permanent magnet 34, along axis B, and with an external indicator 51, in the example shown a light indicator, which is selectively set in different configurations on the basis of the output signal S.

In particular, indicator 51 is selectively set in a first configuration, in the example shown switched on, when permanent magnet 34 is in the active position and locks guide element 6 on upright 10 in the coupling condition, and in a second configuration, in the example shown switched off, when permanent magnet 34 is in the release position.

According to a possible alternative solution not shown, one of magnetic elements 31, 32 may be defined by an electromagnet consisting of a coil of insulated wire wrapped around a ferromagnetic core, and which is activated by turning on the coil with an electric current.

In use, In case of a bottle format change, guide elements 6 have to be dismounted from the respective uprights 10 and then replaced by new guide elements 6. The dismounting operations simply require:
- to feed pressurized air within annular chambers 46 of uprights 10 so as to displace movable elements 39 and permanent magnets 34 against the forces exerted by respective springs 41 and away from respective permanent magnets 35; and
- to raise guide elements 6 so as to remove them from respective uprights 10.

The first operation can be performed by the operator by pressing one or more buttons, so actually cancelling out the time for unlocking the connections between each guide element 6 and the respective uprights 10.

Actuators 36 are maintained in their activated conditions, i.e. with pressurized air fed to annular chambers 46, until the format change operation is completed.

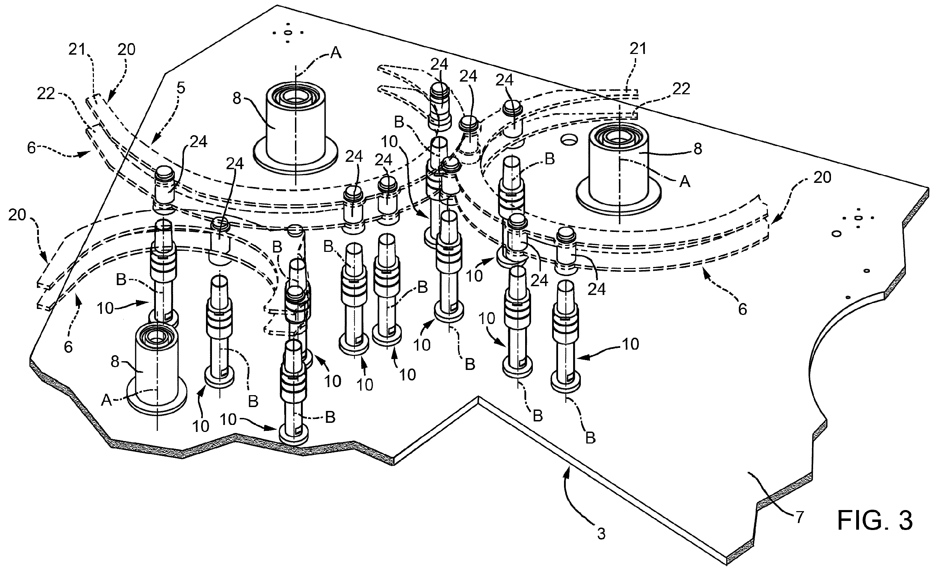

The assembly of new guide elements 6 on respective uprights 10 can be simply performed by axially aligning each connecting portion 24 with the end portion 30 of the respective upright 10 (see Figure 3), and by axially moving the guide elements 6 towards the uprights 10 so as to engage these latter elements within the connecting portions 24 and to reach the relative coupling conditions.

By deactivating actuators 36, i.e. by removing the pressurized air from annular chambers 46, movable elements 39 are subjected to the forces of respective springs 41 and are therefore displaced towards upper walls 40 of respective uprights 10; in this way, permanent magnets 34 are moved to their active positions, in which exert magnetic attraction on the respective permanent magnets 35 of connecting portions 24.

In this final condition, each guide element 6 is locked in the desired position on the respective uprights 10.

The advantages of conveying apparatus 1 according to the present invention will be clear from the foregoing description.

In particular, thanks to the use of magnetic elements 31, 32 and actuator 36 to lock/unlock guide elements 6 on respective uprights 10, the assembly and disassembly operations result especially simplified, allowing a rapid replacement of the guide elements 6. More specifically, the described solution allows to dramatically reduce the time necessary for performing a bottle format change with respect to known conveying apparatuses.

In addition, locking means 18 operate in safe conditions, as the locking of guide elements 6 on the respective uprights 10 is performed by the action of springs 41; therefore, in case of a possible failure of actuators 36 or pneumatic/electronic control circuits, guide elements 6 maintain their positions on the uprights 10.

Last but not least, the new locking system allows to maintain the work environment highly clean.

Clearly, changes may be made to conveying apparatus 1 as described and illustrated herein without, however, departing from the scope of protection as defined in the accompanying claims.

## Claims

1. A conveying apparatus (1) for conveying containers (2), in particular bottles, comprising:
- support means (3);
- at least one conveyor (4) for advancing said containers (2) along a given path (P);
- at least one guide element (6) releasably mounted on said support means (3) in a coupling condition and exerting in use a guiding action on said containers (2) as they are advanced by said conveyor (4) along at least a portion (P1) of said path (P); and
- releasable locking means (18) to lock said guide element (6) on said support means (3) in said coupling condition;
**characterized in that** said locking means (18) comprise at least a first magnetic element (31) carried by said support means (3), at least a second magnetic element (32) carried by said guide element (6), and activation means (33) for selectively setting said first and said second magnetic element (31, 32) in a reciprocal magnetic attraction condition.

2. The conveying apparatus as claimed in claim 1, wherein said first and second magnetic element (31, 32) respectively comprise a first and a second permanent magnet (34, 35) having opposite polarities; and wherein said activation means (33) comprise actuator means (36) for moving at least one (34) of said first and second permanent magnet (34, 35) to and away from the other (35) of said first and second permanent magnet (34, 35) in order to lock or unlock said guide element (6) on said support means (3).

3. The conveying apparatus as claimed in claim 2, wherein said at least one (34) of said first and second permanent magnet (34, 35) is moved by said actuator means (36) between an active position, in which said at least one (34) of said first and second permanent magnet (34, 35) is adjacent to the other (35) of said first and second permanent magnet (34, 35) and exerts a magnetic attraction thereon, and a release position, in which said at least one (34) of said first and second permanent magnet (34, 35) is spaced out from the other (35) of said first and second permanent magnet (34, 35) so as to exclude reciprocal magnetic attraction.

4. The conveying apparatus as claimed in claim 3, wherein said at least one (34) of said first and second permanent magnet (34, 35) is loaded by spring means (41) to said active position; and wherein said actuator means (36) are activated against the action of said spring means (41) to displace said at least one (34) of said first and second permanent magnet (34, 35) to said release position.

5. The conveying apparatus as claimed in any one of the foregoing claims, wherein said support means (3) comprise at least one support upright (10) having a longitudinal axis (B), and wherein said guide element (6) comprises at least one deflector (20) cooperating in use with the containers (2) and extending transversally with respect to said support upright (10) and along a side of said portion (P1) of said path (P).

6. The conveying apparatus as claimed in claim 5, wherein said support upright (10) comprises a hollow body (28) housing said actuator means (36) and said first permanent magnet (34) and having a closed end portion (30); and wherein said guide element (6) comprises at least one cup-shaped connecting portion (24) secured to said deflector (20), housing internally said second permanent magnet (35) and axially engaged in use by said closed end portion (30) of said support upright (10) in said coupling condition.

7. The conveying apparatus as claimed in claim 5 or 6, wherein said support upright (10) comprises a position sensor (50), adapted to generate an output signal (S) correlated to the position of said first permanent magnet (34), and indicator means (51) selectively set in different configurations on the basis of said output signal (S).

8. The conveying apparatus as claimed in any one of the foregoing claims, wherein said conveyor comprises a starwheel (4); and wherein said guide element (6) extends about a portion of said starwheel (4) and faces the starwheel (4) itself.

9. The conveying apparatus as claimed in claim 1, wherein at least one of said first and second magnetic element (31, 32) comprises an electromagnet.

## Patentansprüche

1. Eine Fördereinrichtung (1) zum Fördern von Behältern (2), insbesondere Flaschen, umfassend:
- Aufnahmemittel (3),
- zumindest einen Förderer (4) zum Fortbewegen der Behälter (2) entlang einer gegebenen Strecke (P),
- zumindest ein in koppelnder Weise lösbar an dem Aufnahmemittel (3) gelagertes Führungselement (6), das im Gebrauch einen führenden Einfluss auf die Behälter (2) ausübt, während diese von dem Förderer (4) entlang zumindest eines Abschnitts (P1) der Strecke (P) bewegt werden, und
- lösbare Befestigungsmittel (18) zum koppelnden Befestigen des Führungselements (6) an dem Aufnahmemittel (3),
**dadurch gekennzeichnet, dass** die Befestigungsmittel (18) zumindest ein von den Aufnahmemitteln (3) getragenes erstes Magnetelement (31), zumindest ein von dem Führungselement (6) getragenes zweites Magnetelement (32) sowie Aktivierungsmittel (33) umfassen, um das erste und zweite Magnetelement (31, 32) nach Wunsch in einen sich gegenseitig magnetisch anziehenden Zustand zu versetzen.

2. Die Fördereinrichtung gemäß Anspruch 1, wobei das erste und zweite Magnetelement (31, 32) jeweils einen ersten sowie eine zweiten Dauermagneten (34, 35) mit entgegengesetzten Polaritäten umfassen, und wobei die Aktivierungsmittel (33) Stellglieder (36) umfassen, um zumindest einen (34) von dem ersten und zweiten Dauermagneten (34, 35) auf den anderen (35) von dem ersten und zweiten Dauermagneten (34, 35) zu- und von diesem wegzubewegen, um das Führungselement (6) an dem Aufnahmemittel (3) zu befestigen oder hiervon zu lösen.

3. Die Fördereinrichtung gemäß Anspruch 2, wobei der zumindest eine (34) von dem ersten und zweiten Dauermagneten (34, 35) durch die Stellglieder (36) zwischen einer aktiven Position, in der der zumindest eine (34) von dem ersten und zweiten Dauermagneten (34, 35) benachbart zu dem anderen (35) von dem ersten und zweiten Dauermagneten (34, 35) angeordnet ist und eine magnetische Anziehungskraft auf diesen ausübt, und einer Freigabeposition, in der der zumindest eine (34) von dem ersten und zweiten Dauermagneten (34, 35) von dem anderen (35) von dem ersten und zweiten Dauermagneten (34, 35) beabstandet ist, um eine wechselseitige magnetische Anziehungskraft auszuschließen, bewegt wird.

4. Die Fördereinrichtung gemäß Anspruch 3, wobei der zumindest eine (34) von dem ersten und zweiten Dauermagneten (34, 35) durch Federmittel (41) in die aktive Position vorgespannt ist, und wobei die Stellglieder (36) gegen die Wirkung der Federmittel (41) aktiviert werden, um den zumindest einen (34) von dem ersten und zweiten Dauermagneten (34, 35) in die Freigabeposition zu verlagern.

5. Die Fördereinrichtung gemäß einem der vorigen Ansprüche, wobei die Aufnahmemittel (3) zumindest eine Aufnahmesäule (10) mit einer Längsachse (B) umfassen, und wobei das Führungselement (6) zumindest ein Ablenkelement (20) umfasst, das im Gebrauch mit den Behältern (2) zusammenwirkt und sich quer in Bezug auf die Aufnahmesäule (10) und entlang einer Seite des Abschnitts (P1) der Strecke (P) erstreckt.

6. Die Fördereinrichtung gemäß Anspruch 5, wobei die Aufnahmesäule (10) einen Hohlkörper (28) umfasst, in dem die Stellglieder (36) und der erste Dauermagnet (34) untergebracht sind, und der einen geschlossenen Endabschnitt (30) aufweist, und wobei das Führungselement (6) zumindest einen becherförmigen Verbindungsabschnitt (24) umfasst, der an dem Ablenkelement (20) befestigt ist, in dessen Innern der zweite Dauermagnet (35) untergebracht ist und der im Gebrauch mit dem geschlossenen Endabschnitt (30) der Aufnahmesäule (10) in koppelnder Weise axial in Eingriff steht.

7. Die Fördereinrichtung gemäß Anspruch 5 oder 6, wobei die Aufnahmesäule (10) einen Positionssensor (50) zum Erzeugen eines der Position des ersten Dauermagneten entsprechenden Ausgangssignals (S) sowie Anzeigemittel (51) umfasst, die in Abhängigkeit von dem Ausgangssignal (S) selektiv in unterschiedliche Konfigurationen gesetzt sind.

8. Die Fördereinrichtung gemäß einem der vorigen Ansprüche, wobei der Förderer ein Sternrad (4) umfasst, und wobei das Führungselement (6) sich um einen Abschnitt des Sternrades (4) herum erstreckt und dem Sternrad (4) zugewandt ist.

9. Die Fördereinrichtung gemäß Anspruch 1, wobei zumindest eines aus der Gruppe umfassend den ersten und zweiten Dauermagneten (31, 32) einen Elektromagneten umfasst.

## Revendications

1. Appareil de transport (1) destiné à transporter des conteneurs (2), et en particulier des bouteilles, qui comprend :
- un moyen de support (3) ;
- au moins un convoyeur (4) destiné à faire avancer lesdits conteneurs (2) le long d'un trajet donné (P) ;
- au moins un élément de guidage (6) monté de manière amovible sur ledit moyen de support (3) en état d'accouplement et qui exerce, pendant le fonctionnement, une action de guidage sur lesdits conteneurs (2) au fur et à mesure qu'ils sont avancés par ledit convoyeur (4) le long d'au moins une partie (P1) dudit trajet (P) ; et
- un moyen de verrouillage libérable (18) destiné à verrouiller ledit élément de guidage (6) sur ledit moyen de support (3) dans ledit état d'accouplement ;
**caractérisé en ce que** ledit moyen de verrouillage (18) comprend au moins un premier élément magnétique (31) porté par ledit moyen de support (3), au moins un second élément magnétique (32) porté par ledit élément de guidage (6), et un moyen d'activation (33) destiné à placer sélectivement lesdits premier et second éléments magnétiques (31, 32) dans un état d'attraction magnétique réciproque.

2. Appareil de transport selon la revendication 1, dans lequel lesdits premier et second éléments magnétiques (31, 32) comprennent respectivement un premier et un second aimants permanents (34, 35) qui possèdent des polarités opposées ; et dans lequel ledit moyen d'activation (33) comprend un moyen d'actionnement (36) destiné à déplacer au moins l'un (34) desdits premier et second aimants permanents (34, 35) vers et à l'écart de l'autre (35) desdits premier et second aimants permanents (34, 35) afin de verrouiller ou de déverrouiller ledit élément de guidage (6) sur ledit moyen de support (3).

3. Appareil de transport selon la revendication 2, dans lequel ledit au moins un (34) desdits premier et second aimants permanents (34, 35) est déplacé par ledit moyen d'actionnement (36) entre une position active, dans laquelle ledit au moins un (34) desdits premier et second aimants permanents (34, 35) est adjacent à l'autre (35) desdits premier et second aimants permanents (34, 35) et exerce une attraction magnétique dessus, et une position de libération, dans laquelle ledit au moins un (34) desdits premier et second aimants permanents (34, 35) est espacé de l'autre (35) desdits premier et second aimants permanents (34, 35) de façon à exclure l'attraction magnétique réciproque.

4. Appareil de transport selon la revendication 3, dans lequel ledit au moins un (34) desdits premier et second aimants permanents (34, 35) est chargé par un ressort (41) dans ladite position active ; et dans lequel ledit moyen d'actionnement (36) est activé contre l'action dudit ressort (41) afin de déplacer ledit au moins un (34) desdits premier et second aimants permanents (34, 35) dans ladite position de libération.

5. Appareil de transport selon l'une quelconque des revendications précédentes, dans lequel ledit moyen de support (3) comprend au moins un montant de support (10) qui possède un axe longitudinal (B), et dans lequel ledit élément de guidage (6) comprend au moins un déflecteur (20) qui coopère, pendant le fonctionnement, avec les conteneurs (2) et qui s'étend transversalement par rapport audit montant de support (10) et le long d'un côté de ladite partie (P1) dudit trajet (P).

6. Appareil de transport selon la revendication 5, dans lequel ledit montant de support (10) comprend un corps creux (28) qui contient ledit moyen d'actionnement (36) et ledit premier aimant permanent (34), et qui possède une partie d'extrémité fermée (30) ; et dans lequel ledit élément de guidage (6) comprend au moins une partie de liaison en forme de coupelle (24) fixée sur ledit déflecteur (20), qui contient ledit second aimant permanent (35) et qui, pendant le fonctionnement, est axialement engagée par ladite partie d'extrémité fermée (30) dudit montant de support (10) dans ledit état d'accouplement.

7. Appareil de transport selon la revendication 5 ou 6, dans lequel ledit montant de support (10) comprend un capteur de position (50), adapté pour générer un signal de sortie (S) corrélé à la position dudit premier aimant permanent (34), et un moyen d'indication (51) sélectivement placé dans différentes configurations sur la base dudit signal de sortie (S).

8. Appareil de transport selon l'une quelconque des revendications précédentes, dans lequel ledit convoyeur comprend une roue crantée (4) ; et dans lequel ledit élément de guidage (6) s'étend autour d'une partie de ladite roue crantée (4) et est tourné vers la roue crantée (4) elle-même.

9. Appareil de transport selon la revendication 1, dans lequel au moins l'un desdits premier et second éléments magnétiques (31, 32) comprend un électroaimant.
